# EUROPEAN PATENT SPECIFICATION

(11) **EP 3 747 711 B1**
(45) Date of publication and mention of the grant of the patent: **09.03.2022**
(21) Application number: 19305741.1
(22) Date of filing: 07.06.2019
(51) Int. Cl.: B60S 1/40

(54) **WINDSHIELD WIPER BLADE CONNECTOR**
SCHEIBENWISCHERBLATTVERBINDER
CONNECTEUR DE BALAI D'ESSUIE-GLACE DE PARE-BRISE

(43) Date of publication of application: 09.12.2020
(73) Proprietor: Valeo Systèmes d'Essuyage, 78322 Le Mesnil Saint Denis (FR)
(72) Inventor: GAUCHER, Vincent, 63500 ISSOIRE (FR); HOUSSAT, Stéphane, 63500 ISSOIRE (FR); JOMARD, Olivier, 63500 ISSOIRE (FR); MALINOWSKI, Arkadiusz, 32050 SKAWINA (PL)
(74) Representative: Valeo Visibility

(56) References cited:
- EP-A1- 3 251 904
- EP-A1- 3 251 905
- GB-A- 2 256 790
- US-A- 5 618 124

## Description

### TECHNICAL FIELD OF THE INVENTION

A wiper blade assembly of the type used for clearing water from a windshield or windscreen, and more particularly toward an improved connector for joining a wiper blade to any one of various style wiper arms ends including hook slot styles.

### BACKGROUND OF THE INVENTION

Windshield wipers are used to remove water from the windshield or windscreen of motor vehicles and in related applications. In a typical wiper assembly, a wiper blade connects to the free end of an oscillating or sweeping wiper arm through a central connection device, known as a connector. The connector is usually clipped onto the top side of the wiper blade, generally midway along its length.

Traditionally, the free sweeping end of wiper arms are configured in one of several recurring styles which include hook-slot arms. Hook-slot style arms present an end portion which is bent to form a hook. They are attached by sliding the hook over the connector until a tab borne by a cantilevered beam of the connector automatically locks in a slot of the hook when the sliding is blocked in an attached position by abutment against a stop.

Hook-slot type of wiper arm end may come in a variety of sizes. For example, hook-slot type arms typically have hook bar widths of 9 mm or 12 mm, and a thickness of 4 mm. The hook of these two size classes are referred to as either 9x4 or 12x4 styles. In at least one of these size classes, there are also long hooks and short hooks. There are for instance long 12x4 wiper arms and short 12×4 wiper arms.

To adapt these two thicknesses of arm wiper hook, the connector typically comprises a first stop to block the 12x4 wiper arm in attached position, and a second stop to block the 9x4 wiper arm in attached position. The first stop and the second stop are generally offset longitudinally so that the 9x4 wiper arm passes between the first stop during its sliding toward the attached position.

For replacement blade sales, the connector must be able to accommodate several, or more preferably all, of these arm end sizes. However, wiper arms with the same width but having hooks of different length cannot always be secured by the same tab. Indeed, the slot of a long 12x4 arm will be in correspondence with the tab in attached position, but the short 12x4 arm will abut against the first stop of the connector before its slot reaches the tab.

Document GB 2 256 790 A discloses a connector according to the preamble of claim 1.

### SUMMARY OF THE INVENTION

The invention provides a connector for joining a wiper blade frame to at least two types of hook-slot wiper arms, the connector comprising:
- a central body section;
- at least one stop face for stopping a hook of a hook-slot wiper arm of a determined width in an attached position on the connector in which it is hooked around the central body section;
- at least one first cantilevered beam extending longitudinally to the back from the central body section and comprising a first tab to engage a slot of a first type of hook-slot wiper arm in its attached position; and at least a second cantilevered beam extending longitudinally to the back from the central body section and comprising a second tab longitudinally offset with respect to the first tab to engage a slot of a second type of hook-slot wiper arm in its attached position.

The connector according to the invention is characterized in that the first cantilevered beam and the second cantilevered beam form a first pair of cantilevered beams extending side by side and in that the connector presents a second pair of first and second cantilevered beams, the tabs of the second pair being arranged symmetrically with respect to the tabs of the first pair in relation to a median transverse longitudinal plane on the other side of the central body section.

Embodiments of the invention may also include one or more of the following features :
- the first tab and the second tab are aligned longitudinally on the same side of the central body section;
- the first tab and the second tab each comprises a front ramped face to bend the corresponding cantilevered beam from a rest position toward a retracted position in which the cantilevered beam is bent vertically during the sliding of a wiper arm toward its attached position;
- two opposed cantilevered beams are spaced with a gap allowing each said opposed cantilevered beams to be simultaneously in their retracted position;
- each cantilevered beam comprises at its free end a pushbutton to deflect manually the cantilevered beam toward its retracted position, the pushbuttons of the two cantilevered beam of one pair are arranged side by side so that they can be pushed simultaneously with one finger;
- the connector comprises a second stop face offset longitudinally with respect to the first stop face, for stopping a hook of a second width of a hook-slot wiper arm in its attached position;
- the connector comprises side walls which interconnect on both transverse sides of the central body section defining a channel for receiving the hook of the hook-slot type wiper arms, the side walls including cantilevered extensions projecting beyond a front nose profile of the central body section, a stop being disposed on an inside face of the cantilevered extension to secure in an attached position a hook of an arm wiper for which none of the tabs of a pair coincides with a slot of the arm wiper;
- the central body section comprises a socket that snap-locks to a rivet of a wiper blade frame, the rivet-receiving socket opening longitudinally toward the back between the pair of cantilevered beams.

### BRIEF DESCRIPTION OF THE DRAWINGS

Other features and advantages of the invention will be apparent from the following detailed description, including the drawings, in which:
- figure 1 is a perspective view of an exemplary wiper blade frame with a connector according to the invention exploded therefrom;
- figure 2 is a perspective view of a hook-slot type wiper arm intended to be attached with the connector of figure 1;
- figure 3A to 3B is an illustrative view of a variety of 12x4 and 9x4 wiper arms that can be connected directly to the connector of figure 1 ;
- figure 4 is a bottom perspective view of the connector of figure 1 ;
- figure 5 is a perspective cross-sectional view of the connector taken generally along the longitudinal line 5-5 in figure 4;
- figure 6 is a bottom view of the connector of figure 4;
- figure 7 to 10 illustrate the connector in cross-section as a long 12x4 hook end of a wiper arm is progressively connected thereto;
- figure 11 show the connector in cross-section with a short 12x4 hook end of a wiper arm connected thereto.

### DETAILED DESCRIPTION OF THE DRAWINGS

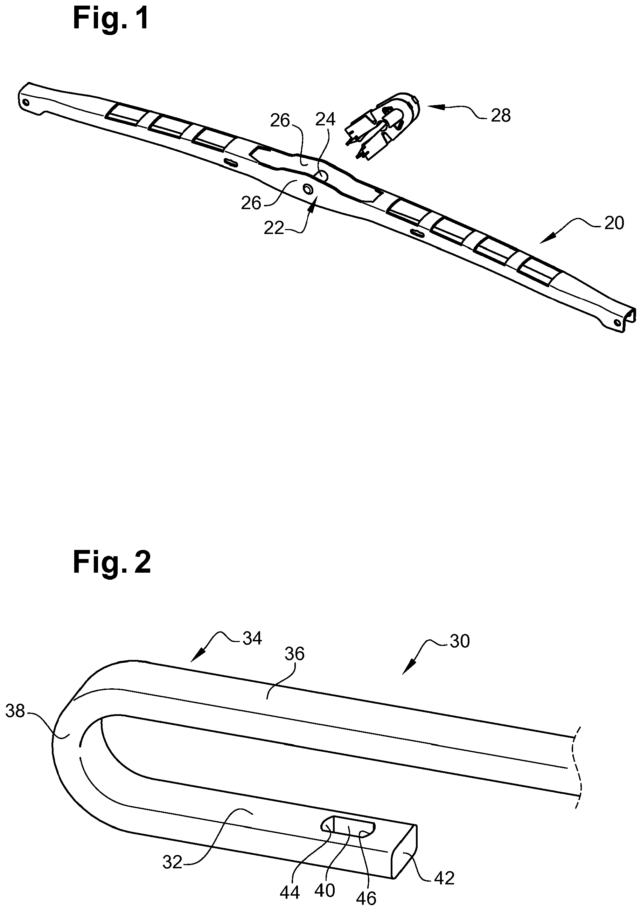

Referring to the figures, wherein like numerals indicate like or corresponding parts throughout the several views, one style of windshield wiper blade frame is generally shown at 20 in figures 1 and 2.

In the following description, longitudinal, vertical and transverse orientations are indicated by the geometrical frame of reference "L,V,T" of the figures. The vertical orientation is not related to the direction of gravity.

The wiper blade frame 20 illustrated here is designed to receive an elongated wiper element (not shown) adapted for direct contact against the windshield of a motor vehicle to scrape water and snow from the windshield as the blade assembly is swept back and forth in an oscillating, repetitive pattern.

The wiper blade frame 20 comprises a bridge piece or portion 22 midway along its length. A rivet 24 is fixed crosswise between upstanding ears 26 of the bridge 22.

A connector, generally indicated at 28, is adapted to snapfit over the rivet 24. The connector 28 forms the basis for connecting to a variety of hook-shaped wiper arms. The connector 28 is adapted to cooperate with any style of wiper blade frame 20 by attaching directly to the rivet 24.

As shown in Figure 2, in a hook-slot wiper arm 30, a distal end portion 32 of the wiper arm 30 is bent to define a hook 34. The hook 34 presents a U-shaped configuration comprises a longitudinal main portion 36 of the arm 30, the distal end portion 32 which is parallel to the main portion 36, and a bight portion 38 which link the distal end portion 32 to the main portion 36. The distal end portion 32 extends in a longitudinal direction.

A slot 40 is located in the distal end portion 32 near a free end 42 of the wiper arm 30. The slot 40 faces the main portion 36 of the wiper arm 30. The slot 40 is delimited longitudinally by a front end 44 which is closer to the bight portion 38 and by a rear end 46 which is closer to the free end 42 of the wiper arm 30.

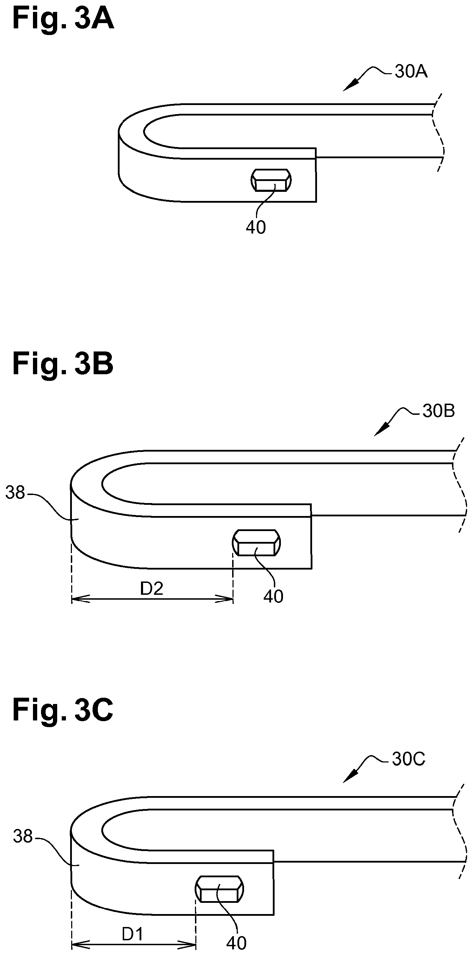

Hook type wiper arms 30 typically have hook bar thicknesses of 4 mm, especially for the wiper arms 30 for trucks. The hook 34 widths are commonly 9 mm or 12 mm with a thickness of 4 mm, so that these two size classes are referred to as either 9x4, as illustrated by the wiper arm 30A in the figure 3A, or 12x4, as illustrated by the wiper arms 30B, 30C in the figures 3B and 3C.

Moreover, there are wiper arms 30 with short distal end portion 32 and some with long distal end portion 32. For instance, there are 12x4 hook ends of the long length variety or long 12x4 wiper arms 30B, as illustrated in figure 3B, and of the short length variety or short 12x4 wiper arms 30C as illustrated on figure 3C. On a short 12x4 wiper arm 30C, the slot 40 is arranged at a shorter longitudinal distance "D1" of the bight end 38 than the distance "D2" between the slot 40 of a long 12x4 wiper arm 30B and its bight portion 38.

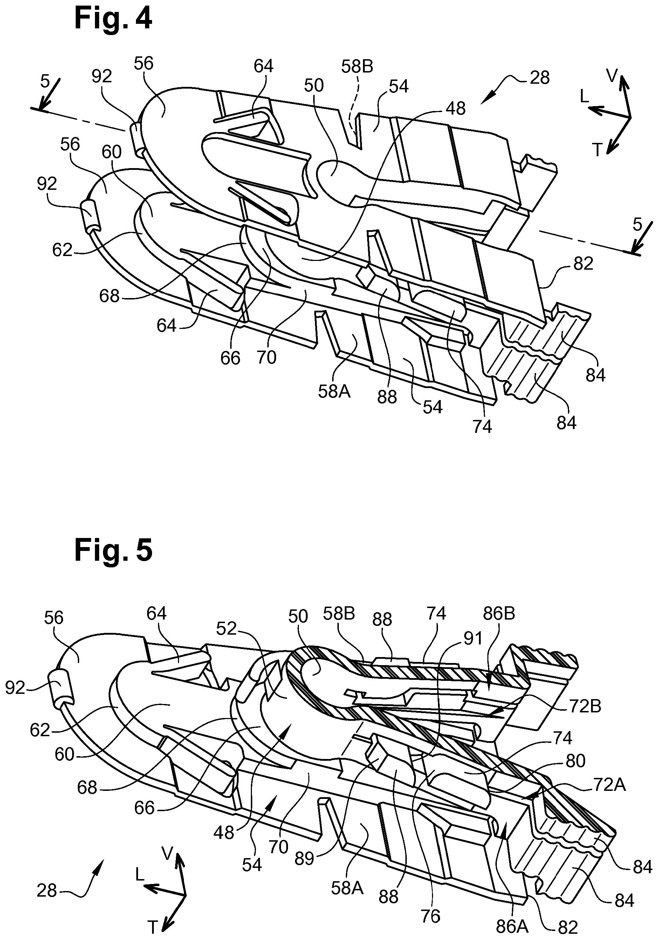

Figures 4, 5 and 6 show various views of the connector 28 from different perspectives and also in a longitudinally sectioned view (FIG. 5). The connector 28 includes a central body section 48 in which a rivet-receiving socket 50 is formed. The rivet-receiving socket 50 has a key-hole shape that snap-locks to the rivet 24 via an interference-fit in its narrow throat area. The rivet-receiving socket 50 opens longitudinally toward the back.

The central body section 48 presents a rounded forward nose profile 52. The connector 28 further includes a pair of side walls 54. The side walls 54 interconnect the central body section 48 on respective inner faces thereof.

The side walls 54 are identical by symmetry with respect to a median longitudinal vertical plan of the connector 28. The side walls 54 include cantilevered extensions 56 projecting beyond the nose profile 52.

The side walls 54 also extend above and below the central body section 48 to define a lower channel 58A and an upper channel 58B. The width of the channels 58A, 58B is greater than the width of the wider type of wiper arm intended to be attached, in this case, 12x4 wiper arms 30B, and 30C. As discussed below, each channel 58A, 58B secures the main portion 36 or the distal end portion 32 of the hook 34.

Each side wall 54 comprises a first projection 60 which extends transversally in the channel 58A, 58B from an inner face. This first projection 60 is delimited in the forward direction by a rounded end face which forms a first stop 62 which block the sliding of the wider type of wiper arm, for example the 12x4 wiper arms 30B, 30C, in an attached position. The first stop 62 is arranged at a distance forward from the nose profile 52 of the central body section 48.

The first projection 60 also comprises an upper and a lower elastically flexible legs 64 extending from each end of the first stop 62 and inclined toward the back. These legs 64 are intended to center the hook 34 vertically relative to the central body section 48 of the connector 28.

Each side wall 54 also comprises a second projection 66 which extends transversally in the channel 58A, 58B beyond the first projection 60. This second projection 66 is limited to the front by a rounded end face which forms a second stop 68 in an attached position for the narrower type of wiper arm, for example the 9x4 wiper arm 30A.

The second stop 68 is offset longitudinally with respect to the first stop 62. More particularly, the second stop 68 is arranged longitudinally between the nose profile 52 of the central body section 48 and the first stop 62.

The second projection 66 also comprises generally planar upper and lower faces 70 which extend longitudinally to the back from the ends of the second stop 68. The upper, respectively lower, planar face 70 is globally coplanar with the upper end, respectively lower end, of the first stop 62.

The first projections 60 are transversally spaced with a distance "W1" which is greater the width "W2" of the narrower type of wiper arm 30A, but less than the width of the wider type of wiper arms 30B, 30C. Therefore, the hook 34 of the 9x4 wiper arms 30A can be received in the channels 58A, 58B between the first projections 60.

A first cantilevered beam 72A extends from the central body section 48. The first cantilevered beam 72A, which is not directly attached to the side walls 54, is positioned at the top of the lower channel 58A. The first cantilevered beam 72A is used to secure the connector 28 to the wiper arms 30, particularly the 9x4 wiper arms 30A and the long 12x4 wiper arm 30B. To this end, the first cantilevered beam 72A includes a first tab 74 that is used to secure the connector 28 to a wiper arm. The first tab 74 includes a ramped face 76 at a front end closer to the nose profile 52 and a stepped face 78 at the back end. The first tab 74 is arranged in a first longitudinal position with respect to the nose profile 52. When the first cantilevered beam 72A is in rest position, the first tab 74 extends vertically in the lower channel 58A. The first cantilevered beam 72A can resiliently bend from the rest position toward retracted position in which the first tab 74 is pushed upward outside the lower channel 58A.

The first cantilevered beam 72A comprises a rear free end that goes beyond a rear edge 82 of the side walls 54 to the back. The free end of the first cantilevered beam 72A includes a textured pushbutton 84 that may be depressed to bend the first cantilevered beam 72A and retract the first tab 74 from the slot 40 to release the connector 28 from the wiper arm 30.

This arrangement works only if the slot 40 of the hook 34 is in correspondence with the first tab 74 in the attached position of the wiper arm 30. However, for some model of wiper arms, for instance for short 12x4 wiper arms 30C, the slot 40 is longitudinally offset from the first tab 74 when the wiper arm 30C is in its attached position.

To solve this problem, the invention provides a connector 28 comprising at least a second cantilevered beam 86A extending longitudinally to the back from the central body section 48. The second cantilevered beam 86A presents a structure similar to the first cantilevered beam 72A. Therefore, it comprises a second tab 88 which is essentially similar to the first tab 74. It thus comprises a front ramped face 89 and a rear stepped face 91 However, the second tab 88 extends in a second position longitudinally offset with respect to the first tab 74 so that the second tab 88 engages a slot 40 of a second type of wiper arm 30C to secure the connector 28 to the wiper arm 30C in the attached position.

In this embodiment, the second tab 88 is closer to the first stop 62 than the first tab 74 so that it can engage the slot 40 of a short 12x4 wiper arm 30C in its attached position.

In the embodiments shown in the figures, the first tab 74 and the second tab 88 are aligned longitudinally on the same side of the central body section 48, that is to say in the same channel 58A. The first cantilevered beam 72A and the second cantilevered beam 86A form a pair of cantilevered beams extending side by side on the top of the lower channel 58A, between the two side walls 54.

Each cantilevered beam 72A, 86A of the pair presents a notch 90 in the edge adjacent to the other cantilevered beam 86A, 72A to receive a part of the tab 74, 88 of said other cantilevered beam 86A, 72A. This allows the longitudinal alignment of the tabs 74, 88.

The cantilevered beams 72A, 86A of the pair can be bent independently of each other. Therefore, each cantilevered beam 72A, 86A can be bent in its retracted position while the other cantilevered beam 86A, 72A stays in its rest position.

The pushbuttons 84 of the two cantilevered beams 72A of the pair are arranged side by side so that they can be pushed simultaneously with one finger to bend manually the cantilevered beams 72A, 86A of the pair toward their retracted position.

In order to simplify the use of the connector 28, it presents a second pair of first and second cantilevered beams 72B, 86B arranged in the upper channel 58B. Each cantilevered beams 72B, 86B o the second pair also comprises a first tab 74 and a second tab 88. The tabs 74, 88 of second pair are arranged symmetrically with respect to the tabs 74, 88 of the first pair in relation to a median transverse longitudinal plane of the central body section 48. The connector 28 can thus be used upside down with the same result and the same procedure of attachment.

According to a variant of the invention, the tabs 74, 88 of the lower pair are offset longitudinally with respect to the tabs 74, 88 of the upper pair. This allows the connector 28 to be adapted on a larger collection of type of wiper arms. However, this requires that the connector 28 is oriented correctly by contrast with the symmetric embodiment.

According to another variant of the invention, the connector 28 comprises one unique tab 74, 88 in each channel 58A, 58B, the tabs 74, 88 being offset longitudinally in order to use the connector 28 right side up for a first type of arm wipers and upside down for a second type of arm wipers.

In any of the embodiments, two opposed cantilevered beams 72A, 86B and 86A, 72B of each pair facing each other vertically are spaced with a vertical gap allowing each said cantilevered beams 72A to be simultaneously in their retracted position.

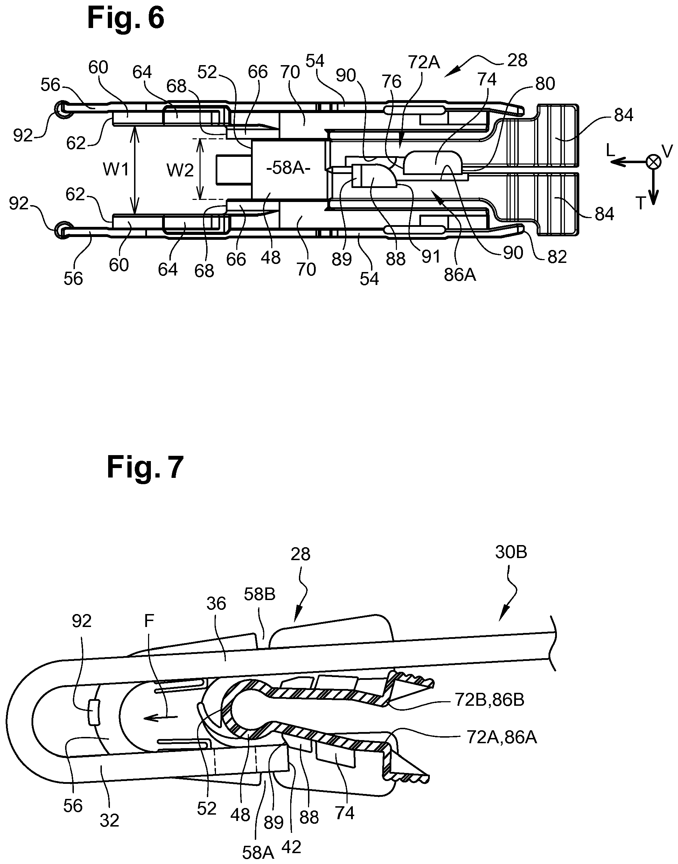

As shown in Figs. 7 to 11, to attach the connector 28 to a 12x4 wiper arm 30B, 30C, the connector 28 is positioned with the upper channel 58B (or indifferently the lower channel 58A when the connector 28 is symmetric) next to the main portion 36 of the wiper arm 30B. Since there are no slots in the main portion 36 of the wiper arm 30B, the cantilevered beams 72B, 86B of the upper pair are biased toward their retracted position in which they stay until the detachment of the wiper arm 30B, 30C.

The connector 28 is then moved along the wiper arm 30B, 30C in the direction indicated by the arrow F, so that the nose profile 52 of the central body section 48 passes between the distal end portion 32 and the main portion 36 of the wiper arm 30B, and the bight portion 38 of the wiper arm 30B, 30C passes between extensions 56 of the connector 28. The distal end portion 32 is thus received in the lower channel 58A.

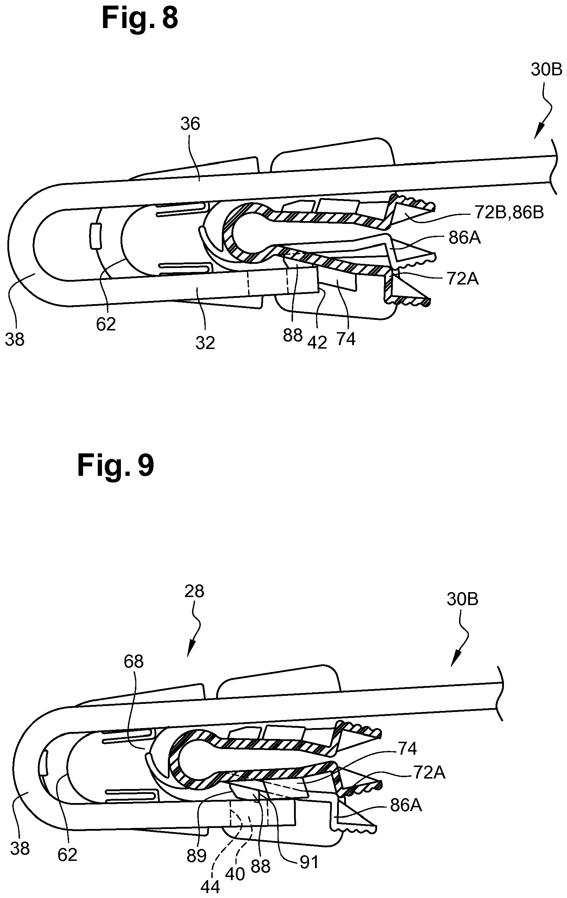

When the free end 42 of the wiper arm 30B, 30C encounters the second tab 88, the hook 34 slides along the ramped face 89 in a horizontal direction. This generates an upward force that pushes up on the second cantilevered beam 86A and bends the beam 86A (Fig. 8) from the rest position toward the retracted position. The hook 34 continues to exert the upward force on the second cantilevered beam 86A until the stepped face 91 of the second tab 88 is aligned with the slot 40. The second cantilevered beam 86A snaps back toward its rest position and engages the second tab 88 into the slot 40 (Fig. 9).

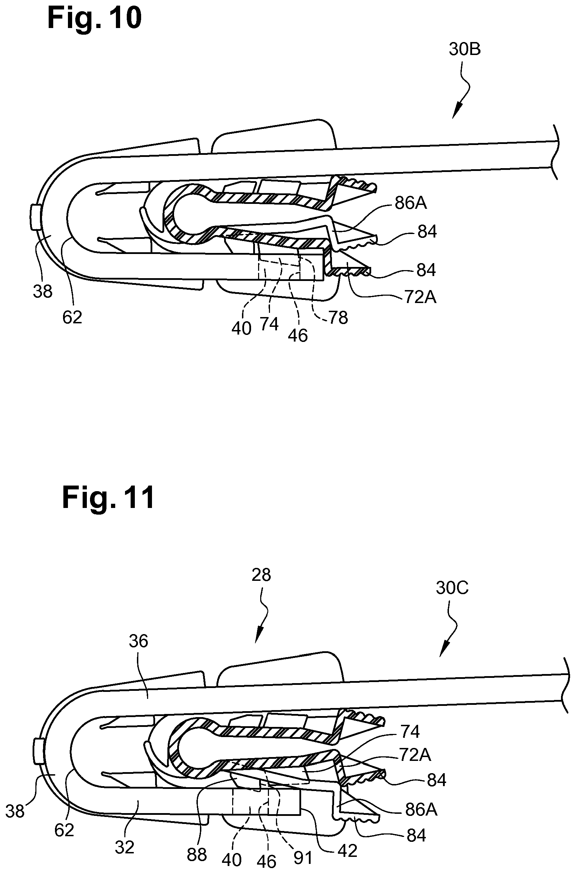

At that point, if the wiper arm is of the short 12x4 type 30C, as illustrated in figure 11, the wiper arm 30C is prevented to continue its longitudinal sliding by abutment of the bight portion 38 against the associated stop 62. The wiper arm 30C is in its attached position. When the second tab 88 is in the slot 40, the stepped face 91 of the second tab 88 abuts against a rear end 46 of the slot 40 to secure the wiper arm 30C in its attached position on the connector 28.

Here, the short 12x4 wiper arm 30C is long enough so that the free end 42 of the wiper arm 30 encounters the first tab 74 before it has reached its attached position. This generates an upward force that pushes up on the first cantilevered beam 72A and bends the beam 72A from the rest position toward the retracted position in which it stays as long as the wiper arm 30C is attached to the connector 28.

However, if the wiper arm is of the long 12x4 type 30B, as illustrated on figures 9 and 10, the connector 28 continues to slide longitudinally forward in the hook 34, the front end 44 of the slot 40 slides along the ramped face 89 of the second tab 88 in a horizontal direction. This generates an upward force that pushes up again on the second cantilevered beam 86A and bends the beam 86A (Fig. 10) from the rest position toward the retracted position. The second cantilevered beam 86A will be maintained toward its retracted position by contact with the distal end portion 32 of the hook 34 until the detachment of the wiper arm 30.

When the free end 42 of the wiper arm 30 encounters the first tab 74, the hook 34 slides along the ramped face 76 in a longitudinal direction. This generates an upward force that pushes down on the first cantilevered beam 72A and bends the beam 72A (Fig. 9) from the rest position toward the retracted position. The hook 34 continues to exert the upward force on the first cantilevered beam 72A until the stepped face 78 of the first tab 74 is aligned with the slot 40. The first cantilevered beam 72A snaps back into place in its rest position and engages the first tab 74 into the slot 40 (Fig. 10).

At that point, the long 12x4 wiper arm 30B is prevented to continue its longitudinal sliding by abutment of the bight portion 38 against the associated stop 62. The wiper arm 30B is in its attached position. When the first tab 74 is in the slot 40, the stepped face 78 of the first tab 74 abuts against the rear end 46 of the slot 40 to secure the wiper arm 30B in its attached position on the connector 28.

For the two types of arms 30B, 30C, the connector 28 may be removed from the arm 30B, 30C in a two-step process. A user first depresses the pushbuttons 84 to push down simultaneously on the two cantilevered beams 72A, 86A of the lower pair to release the engaged tab 74 or 88 from the slot 40, and to maintain the other tab in its rest position. The user then slides the connector 28 backward from between the distal end portion 32 and the main portion 36.

Advantageously, a stop 92 is disposed on an inside face of the cantilevered extension 56 to secure in an attached position a hook 34 of an arm wiper for which none of the tabs 74, 88 of a pair coincides with a slot 40 of the arm wiper in attached position. This allows the connector 28 to be adapted to a larger collection of hook type wiper arms which are large enough to cooperate with the stops, here 12 mm wide wiper arms.

In use, a 12x4 hook passes between the cantilevered extensions 56 of side walls 54 sliding against the stops 92 and causing the cantilevered extensions 56 to flare outwardly to create the necessary clearance for the hook arm to pass. Once the hook arm is in its attached position, the cantilevered extensions 56 snap back into position thereby blocking unintended removal of the 12x4 hook arm from the connector 28. To accommodate flaring of the cantilevered extensions 56, the connector 28 must be rotated into a service up position relative to the wiper blade frame 20 in which the cantilevered extensions 56 are pointing out of the ears 26 of the bridge 22. When the wiper arm is in its attached position, the connector 28 is pivoted in an angular position of use in which the cantilevered extensions 56 are accommodated between the ears 26 of the bridge which prevent the cantilevered extensions to flare outwardly.

The connector 28 according to the invention allows attaching a large variety of wiper arms of the hook type to a wiper blade frame.

## Claims

1. A connector (28) for joining a wiper blade frame (20) to at least two types of hook-slot wiper arms (30B, 30C), the connector (28) comprising:
- a central body section (48);
- at least one stop face (62) for stopping a hook of Z a hook-slot wiper arm (30B, 30C) of a determined width in an attached position on the connector (28) in which it is hooked around the central body section (48);
- at least one first cantilevered beam (72A) extending longitudinally to the back from the central body section (48) and comprising a first tab (74) to engage a slot (40) of a first type of hook-slot wiper arm (30B) in its attached position; and
- at least one second cantilevered beam (86A, 86B) extending longitudinally to the back from the central body section (48) and comprising a second tab (88) longitudinally offset with respect to the first tab (74) to engage a slot (40) of a second type of hook-slot wiper arm (30C) in its attached position, **characterized in that** the first cantilevered beam (72A, 72B) and the second cantilevered beam (86A, 86B) form a first pair of cantilevered beams extending side by side and **in that** the connector presents a second pair of first and second cantilevered beams (72B, 86B), the tabs (74 88) of the second pair being arranged symmetrically with respect to the tabs (74, 88) of the first pair in relation to a median transverse longitudinal plane on the other side of the central body section (48).

2. A connector (28) according to claim 1, **characterized in that** the first tab (74) and the second tab (88) are aligned longitudinally on the same side of the central body section (48).

3. A connector (28) according to any one of the previous claims **characterized in that** the first tab (74) and the second tab (88) each comprises a front ramped face (76, 89) to bend the corresponding cantilevered beam (72A, 72B, 86A, 86B) from a rest position toward a retracted position in which the cantilevered beam (72A, 72B, 86A, 86B) is bent vertically during the sliding of a wiper arm (30B, 30C) toward its attached position.

4. A connector (28) according to any one of the previous claims, **characterized in that** two opposed cantilevered beams (72A, 86B and 72B, 86A) are spaced with a gap allowing each said opposed cantilevered beams (72A, 86B and 72B, 86A) to be simultaneously in their retracted position.

5. A connector (28) according to any one of the previous claims, **characterized in that** each cantilevered beam (72A, 72B, 86A, 86B) comprises at its free end a pushbutton (84) to deflect manually the cantilevered beam (72A, 72B, 86A, 86B) toward its retracted position, the pushbuttons (84) of the two cantilevered beam (72A, 86A and 72B, 86B) of one pair are arranged side by side so that they can be pushed simultaneously with one finger.

6. A connector (28) according to any one of the previous claims, **characterized in that** it comprises a second stop face (68) offset longitudinally with respect to the first stop face, for stopping a hook of a second width of a hook-slot wiper arm (30A) in its attached position.

7. A connector (28) according to any one of the previous claims, **characterized in that** the connector (28) comprises side walls (54) which interconnect on both transverse sides of the central body section (48) defining a channel (58A, 58B) for receiving the hook (34) of the hook-slot type wiper arms (30A, 30B, 30C), the side walls (54) including cantilevered extensions (56) projecting beyond a front nose profile (52) of the central body section (48), a stop (92) being disposed on an inside face of the cantilevered extension (56) to secure in an attached position a hook (34) of an arm wiper for which none of the tabs (74, 88) of a pair coincides with a slot of the arm wiper.

8. A connector (28) according to any one of the previous claims, **characterized in that** the central body section (48) comprises a socket (50) that snap-locks to a rivet (24) of a wiper blade frame (20), the rivet-receiving socket (50) opening longitudinally toward the back between the pair of cantilevered beams (72A, 72B, 86A, 86B).

## Patentansprüche

1. Verbinder (28) zum Verbinden eines Wischerblattrahmens (20) mit mindestens zwei Arten von Haken-Schlitz-Wischerarmen (30B, 30C), wobei der Verbinder (28) Folgendes umfasst:
- einen mittleren Körperabschnitt (48);
- mindestens eine Anschlagfläche (62) zum Stoppen eines Hakens eines Haken-Schlitz-Wischerarms (30B, 30C) mit einer festgelegten Breite in einer befestigten Position am Verbinder (28), in der er um den mittleren Körperabschnitt (48) herum eingehakt ist;
- mindestens einen ersten auskragenden Balken (72A), der sich in Längsrichtung vom mittleren Körperabschnitt (48) zur Rückseite erstreckt und eine erste Lasche (74) umfasst, um in seiner befestigten Position in einen Schlitz (40) eines ersten Typs Haken-Schlitz-Wischerarm (30B) einzugreifen; und
- mindestens einen zweiten auskragenden Balken (86A, 86B), der sich in Längsrichtung vom mittleren Körperabschnitt (48) zur Rückseite erstreckt und eine zweite Lasche (88) umfasst, die in Längsrichtung in Bezug zu der ersten Lasche (74) versetzt ist, um in seiner befestigten Position in einen Schlitz (40) eines zweiten Typs Haken-Schlitz-Wischerarm (30C) einzugreifen,
**dadurch gekennzeichnet, dass**
der erste auskragende Balken (72A, 72B) und der zweite auskragende Balken (86A, 86B) ein erstes Paar auskragende Balken ausbilden, die sich nebeneinander erstrecken,
und dadurch, dass der Verbinder ein zweites Paar aus einem ersten und zweiten auskragenden Balken (72B, 86B) aufweist, wobei die Laschen (74, 88) des zweiten Paars in Bezug zu den Laschen (74, 88) des ersten Paars in Bezug zu einer mittleren, in Querrichtung verlaufenden Längsebene auf der anderen Seite des mittleren Körperabschnitts (48) symmetrisch angeordnet sind.

2. Verbinder (28) nach Anspruch 1, **dadurch gekennzeichnet, dass** die erste Lasche (74) und die zweite Lasche (88) in Längsrichtung auf derselben Seite des mittleren Körperabschnitts (48) ausgerichtet sind.

3. Verbinder (28) nach einem der vorstehenden Ansprüche, **dadurch gekennzeichnet, dass** die erste Lasche (74) und die zweite Lasche (88) jeweils eine vordere Schrägfläche (76, 89) umfassen, um den zugehörigen auskragenden Balken (72A, 72B, 86A, 86B) aus einer Ruheposition in eine eingefahrene Position zu krümmen, in welcher der auskragende Balken (72A, 72B, 86A, 86B) beim Verschieben eines Wischerarms (30B, 30C) in seine befestigte Position vertikal gekrümmt wird.

4. Verbinder (28) nach einem der vorstehenden Ansprüche, **dadurch gekennzeichnet, dass** zwei entgegengesetzte auskragende Balken (72A, 86B und 72B, 86A) mit einem Spalt beabstandet sind, der zulässt, dass jeder der entgegengesetzten auskragenden Balken (72A, 86B und 72B, 86A) gleichzeitig in seiner eingefahrenen Position ist.

5. Verbinder (28) nach einem der vorstehenden Ansprüche, **dadurch gekennzeichnet, dass** jeder auskragende Balken (72A, 72B, 86A, 86B) an seinem freien Ende einen Drucktaster (84) umfasst, um den auskragenden Balken (72A, 72B, 86A, 86B) manuell in seine eingefahrene Position abzulenken, wobei die Drucktaster (84) der zwei auskragenden Balken (72A, 86A und 72B, 86B) eines Paars nebeneinander angeordnet sind, sodass sie mit einem Finger gleichzeitig gedrückt werden können.

6. Verbinder (28) nach einem der vorstehenden Ansprüche, **dadurch gekennzeichnet, dass** er eine zweite Anschlagfläche (68) umfasst, die in Längsrichtung in Bezug zur ersten Anschlagfläche versetzt ist, um einen Haken mit einer zweiten Breite eines Haken-Schlitz-Wischerarms (30A) in seiner befestigten Position zu stoppen.

7. Verbinder (28) nach einem der vorstehenden Ansprüche, **dadurch gekennzeichnet, dass** der Verbinder (28) Seitenwände (54) umfasst, die auf beiden Querseiten des mittleren Körperabschnitts (48) miteinander verbunden sind und einen Kanal (58A, 58B) zur Aufnahme des Hakens (34) der Haken-Schlitz-Wischerarme (30A, 30B, 30C) definieren, wobei die Seitenwände (54) auskragende Verlängerungen (56) aufweisen, die über ein vorderes Nasenprofil (52) des mittleren Körperabschnitts (48) hinaus vorstehen, wobei ein Anschlag (92) an einer Innenfläche der auskragenden Verlängerung (56) angeordnet ist, um in einer befestigten Position einen Haken (34) eines Wischerarms zu fixieren, bei dem keine der Laschen (74, 88) eines Paars mit einem Schlitz des Wischerarms zusammenpassen.

8. Verbinder (28) nach einem der vorstehenden Ansprüche, **dadurch gekennzeichnet, dass** der mittlere Körperabschnitt (48) eine Aufnahme (50) umfasst, die in einen Niet (24) eines Wischerblattrahmens (20) einrastet, wobei die Nietaufnahme (50) zur Rückseite hin zwischen dem Paar auskragender Balken (72A, 72B, 86A, 86B) in Längsrichtung offen ist.

## Revendications

1. Raccord (28) servant à unir une ossature de balai d'essuie-glace (20) à au moins deux types de bras d'essuie-glace recourbés en crochet (30B, 30C), le raccord (28) comprenant :
- une section corps centrale (48) ;
- au moins une face d'arrêt (62) pour arrêter un crochet d'un bras d'essuie-glace recourbé en crochet (30B, 30C) d'une largeur déterminée dans une position attachée sur le raccord (28) dans laquelle il est accroché autour de la section corps centrale (48) ;
- au moins une première branche en porte-à-faux (72A) s'étendant longitudinalement vers l'arrière à partir de la section corps centrale (48) et comprenant une première saillie (74) destinée à venir en prise avec une fente (40) d'un premier type de bras d'essuie-glace recourbé en crochet (30B) dans sa position attachée ; et
- au moins une seconde branche en porte-à-faux (86A, 86B) s'étendant longitudinalement vers l'arrière à partir de la section corps centrale (48) et comprenant une seconde saillie (88), longitudinalement décalée vis-à-vis de la première saillie (74), destinée à venir en prise avec une fente (40) d'un second type de bras d'essuie-glace recourbé en crochet (30C) dans sa position attachée,
**caractérisé en ce que**
la première branche en porte-à-faux (72A, 72B) et la seconde branche en porte-à-faux (86A, 86B) forment une première paire de branches en porte-à-faux s'étendant côte à côte et
**en ce que** le raccord présente une seconde paire de première et seconde branches en porte-à-faux (72B, 86B), les saillies (74, 88) de la seconde paire étant placées symétriquement par rapport aux saillies (74, 88) de la première paire relativement à un plan longitudinal transversal médian sur l'autre côté de la section corps centrale (48).

2. Raccord (28) selon la revendication 1, **caractérisé en ce que** la première saillie (74) et la seconde saillie (88) sont alignées longitudinalement sur le même côté de la section corps centrale (48).

3. Raccord (28) selon l'une quelconque des revendications précédentes, **caractérisé en ce que** la première saillie (74) et la seconde saillie (88) comprennent chacune une face avant en pente (76, 89) pour courber la branche en porte-à-faux (72A, 72B, 86A, 86B) correspondante d'une position de repos vers une position rétractée dans laquelle la branche en porte-à-faux (72A, 72B, 86A, 86B) est courbée verticalement lorsqu'un bras d'essuie-glace (30B, 30C) glisse vers sa position attachée.

4. Raccord (28) selon l'une quelconque des revendications précédentes, **caractérisé en ce que** deux branches en porte-à-faux opposées (72A, 86B et 72B, 86A) sont espacées par un intervalle permettant à chacune desdites branches en porte-à-faux opposées (72A, 86B et 72B, 86A) de se trouver simultanément dans leur position rétractée.

5. Raccord (28) selon l'une quelconque des revendications précédentes, **caractérisé en ce que** chaque branche en porte-à-faux (72A, 72B, 86A, 86B) comprend, à son extrémité libre, un poussoir (84) pour dévier manuellement la branche en porte-à-faux (72A, 72B, 86A, 86B) vers sa position rétractée, les poussoirs (84) des deux branches en porte-à-faux (72A, 86A et 72B, 86B) d'une paire étant placés côte à côte de sorte qu'ils puissent être poussés simultanément avec un doigt.

6. Raccord (28) selon l'une quelconque des revendications précédentes, **caractérisé en ce qu'**il comprend une seconde face d'arrêt (68) décalée longitudinalement vis-à-vis de la première face d'arrêt, pour arrêter un crochet d'une seconde largeur d'un bras d'essuie-glace recourbé en crochet (30A) dans sa position attachée.

7. Raccord (28) selon l'une quelconque des revendications précédentes, **caractérisé en ce que** le raccord (28) comprend des parois latérales (54) qui se rejoignent sur les deux côtés transversaux de la section corps centrale (48) en définissant un canal (58A, 58B) destiné à recevoir le crochet (34) des bras d'essuieglace recourbés en crochet (30A, 30B, 30C), les parois latérales (54) comprenant des sections de prolongement en porte-à-faux (56) faisant saillie au-delà d'une proéminence avant (52) de la section corps centrale (48), une butée (92) étant disposée sur une face intérieure de la section de prolongement en porte-à-faux (56) afin d'assujettir dans une position attachée un crochet (34) d'un bras d'essuie-glace pour lequel aucune des saillies (74, 88) d'une paire ne coïncide avec une fente du bras d'essuie-glace.

8. Raccord (28) selon l'une quelconque des revendications précédentes, **caractérisé en ce que** la section corps centrale (48) comprend un logement (50) qui s'adapte solidement par emboîtement-pression sur un rivet (24) d'une ossature de balai d'essuie-glace (20), le logement de réception de rivet (50) étant ouvert longitudinalement vers l'arrière entre la paire de branches en porte-à-faux (72A, 72B, 86A, 86B).
